(19) Europäisches Patentamt
European Patent Office
Office européen des brevets

(11) **EP 4 742 481 A1**

(12) **EUROPEAN PATENT APPLICATION**
published in accordance with Art. 153(4) EPC

(43) Date of publication:
**13.05.2026 Bulletin 2026/20**

(21) Application number: **24856728.1**

(22) Date of filing: **12.08.2024**

(51) International Patent Classification (IPC):
$H02J\ 3/32^{(2026.01)}$       $H02J\ 7/00^{(2026.01)}$
$G06F\ 17/15^{(2006.01)}$

(52) Cooperative Patent Classification (CPC):
**G06Q 50/06; G06F 17/15; G06Q 10/04; H02J 3/32; H02J 7/00**

(86) International application number:
**PCT/KR2024/011993**

(87) International publication number:
**WO 2025/042116 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.08.2023 KR 20230110622**

(71) Applicant: **LG Energy Solution, Ltd.
Seoul 07335 (KR)**

(72) Inventor: **CHOI, Yo Hwan
Daejeon 34122 (KR)**

(74) Representative: **BCKIP Part mbB
Landsberger Straße 98
80339 München (DE)**

(54) **DEVICE FOR CONTROLLING ENERGY STORAGE SYSTEM AND METHOD FOR CONTROLLING ENERGY STORAGE SYSTEM**

(57) An energy storage system control device may include a communication unit to receive an external power generation amount and an internal power consumption amount, a user interface unit to receive a cost function selection command from a user, a controller to determine an objective function based on a cost function selected by the user and perform battery control optimization based on the external power generation amount, the internal power consumption amount, and the objective function, wherein the controller is to perform the battery control optimization based on a first time point, determine a predicted value of battery charging/discharging power based on the battery control optimization performed at the first time point, and determine a predicted section including the predicted value of the battery charging/discharging power and re-perform the battery control optimization based on an actual value of the battery charging/discharging power being out of a range of the predicted section.

FIG.2

EP 4 742 481 A1

Description

**TECHNICAL FIELD**

CROSS-REFERENCE TO RELATED APPLICATION

This application claims priority to and the benefit of Korean Patent Application No. 10-2023-0110622 filed in the Korean Intellectual Property Office on August 23, 2023, the entire contents of which are incorporated herein by reference.

TECHNICAL FIELD

Embodiments disclosed herein relate to an apparatus for controlling an energy storage system and a method of controlling the energy storage system.

**BACKGROUND ART**

An energy storage system (ESS) is a device for increasing the efficiency of power use by storing generated electricity in a storage device such as a battery and supplying the same when power is needed. The ESS may store electricity generated by renewable energy such as solar and wind power or electricity received from a power plant in a battery, store power at night when power consumption is low, and use the stored power during the day when power consumption is high.

To effectively distribute the power use of the ESS, efficient scheduling of charging and discharging is required, and in the past, there was a limitation that errors occurred because the uncertainty in the prediction of renewable energy generation and power consumption was not considered.

**DISCLOSURE**

**TECHNICAL PROBLEM**

One embodiment disclosed herein provides an apparatus for controlling an energy storage system and a method of controlling the energy storage system, which consider the uncertainty in the prediction of renewable energy generation and power consumption to increase the efficiency of the energy storage system.

The technical objects of the embodiments disclosed herein are not limited to the above-described technical objects, and other objects that are not described will be able to be clearly understood by those skilled in the art from the following descriptions.

**TECHNICAL SOLUTION**

An energy storage system control device according to one embodiment includes a communication unit configured to receive an external power generation amount and an internal power consumption amount, a user interface unit configured to receive a cost function selection command from a user, a controller configured to determine an objective function based on a cost function selected by the user and perform battery control optimization based on the external power generation amount, the internal power consumption amount, and the objective function, wherein the controller is configured to perform the battery control optimization based on a first time point, determine a predicted value of battery charging/discharging power based on the battery control optimization performed at the first time point, and determine a predicted section including the predicted value of the battery charging/discharging power and re-perform the battery control optimization based on an actual value of the battery charging/discharging power being out of a range of the predicted section.

The controller may adjust a variable for the battery control optimization based on the actual value of the battery charging/discharging power being out of the range of the predicted section.

The controller may re-perform the battery control optimization based on the variable adjusted for the battery control optimization.

The controller may receive a weight for determining a priority of the cost function through the user interface unit from the user and determine the objective function using a weighted sum of the weight and the cost function.

The user interface unit may further include an input unit, and the input unit may be configured as a user interface (UI) in which a ratio of the weight is adjusted based on the user's input.

The controller may recommend the weight to the user based on the weight being not input for a preset time from the user.

The controller may generate combinations to be generated based on the number of cost functions and section information of the weight and recommend a combination with the lowest power purchase cost among the combinations to the user.

The cost function may include a function that minimizes a difference between a backup state of charge (SOC) used in a home energy storage system and the user's required SOC.

The cost function may include a function that minimizes a difference between a current indoor temperature used in a home energy storage system and the user's required temperature.

The controller may modify a charging/discharging schedule based on the re-performed battery control optimization and perform charging/discharging based on the modified charging/discharging schedule.

A method of controlling an energy storage system according to one embodiment includes receiving an external power generation amount and an internal power consumption amount, receiving a cost function selection command from a user, determining an objective function based on a cost function selected by the user, and performing battery control optimization based on the external power generation amount, the internal power consumption amount, and the objective function, wherein the performing of the battery control optimization includes performing the battery control optimization based on a first time point, determining a predicted value of battery charging/discharging power based on the battery control optimization performed at the first time point, determining a predicted section including the predicted value of the battery charging/discharging power, and re-performing the battery control optimization based on an actual value of the battery charging/discharging power being out of a range of the predicted section.

The method according to one embodiment may further include adjusting a variable for the battery control optimization based on the actual value of the battery charging/discharging power being out of the range of the predicted section.

The method according to one embodiment may further include re-performing the battery control optimization based on the variable adjusted for the battery control optimization.

The determining of the objective function may include receiving a weight for determining a priority of the cost function through the user interface unit from the user and determining the objective function using a weighted sum of the weight and the cost function.

The method according to one embodiment may further include adjusting a ratio of the weight based on the user's input that is input to an input unit included in the user interface unit.

The method according to one embodiment may further include recommending the weight to the user based on the weight being not input for a preset time from the user.

The recommending of the weight to the user may include generating combinations to be generated based on the number of cost functions and section information of the weight and recommending a combination with the lowest power purchase cost among the combinations to the user.

The cost function may include a function that minimizes a difference between a backup state of charge (SOC) used in a home energy storage system and the user's required SOC.

The cost function may include a function that minimizes a difference between a current indoor temperature used in a home energy storage system and the user's required temperature.

The method according to one embodiment may further include modifying a charging/discharging schedule based on the re-performed battery control optimization and performing charging/discharging based on the modified charging/discharging schedule.

## ADVANTAGEOUS EFFECTS

According to the apparatus for controlling the energy storage system according to one embodiment, it is possible to consider the uncertainty in the prediction of renewable energy generation and power consumption to optimize the energy storage system, thereby reducing errors in optimizing the energy storage system.

According to the apparatus for controlling the energy storage system according to one embodiment, it is possible to allow the user to select the objective function and the weight in the process of optimizing the energy storage system, thereby achieving the optimization consistent with the user's intention.

## DESCRIPTION OF DRAWINGS

FIG. 1 schematically shows a configuration of an energy storage system control device and a power operation system according to one embodiment.

FIG. 2 shows a block diagram of the configuration of the energy storage system control device according to one embodiment.

FIG. 3 schematically shows a flow in which a controller of the energy storage system control device according to one embodiment determines whether to re-perform optimization.

FIG. 4 shows a graph of conditions in which the energy storage system is optimized by the energy storage system control device according to one embodiment.

FIG. 5 shows a user interface unit of the energy storage system control device according to one embodiment.

FIG. 6 shows a table for recommending a weight in the energy storage system control device according to one embodiment.

FIG. 7 shows a flowchart of a method of controlling the energy storage system according to one embodiment.

FIG. 8 continuously shows a flowchart of the method of controlling the energy storage system according to one embodiment after FIG. 7.

**MODE FOR INVENTION**

Hereinafter, various embodiments disclosed herein will be described in detail with reference to the accompanying drawings. The same components in the drawings herein use the same reference numerals, and overlapping descriptions of the same components will be omitted.

For various embodiments disclosed herein, specific structural and functional descriptions are provided merely for the purpose of describing the embodiments, and various embodiments disclosed herein may be implemented in various forms and should not be construed as being limited to the embodiments described herein.

Expressions such as "first," "second," "primary," and "secondary" used in various embodiments may indicate various components regardless of sequence and/or importance and do not limit the corresponding components. For example, a first component may be referred to as a second component, and similarly, the second component may also be referred to as the first component without departing from the scopes of the embodiments disclosed herein.

The terms used herein are used only to describe specific embodiments and may not be intended to limit the scopes of other embodiments. The singular expression includes the plural expression unless the context clearly dictates otherwise.

All terms used herein, including technical or scientific terms, may have the same meaning as commonly understood by those skilled in the art of the embodiments disclosed herein. Terms defined in commonly used dictionaries may be construed as having the same or similar meaning in the context of the relevant technology and are not construed in an ideal or overly formal sense unless explicitly defined herein. In some cases, even terms defined herein may not be construed to exclude the embodiments disclosed herein.

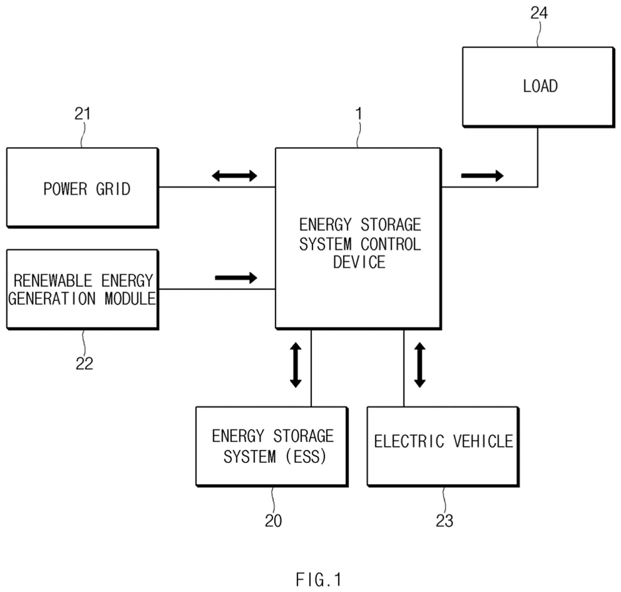

FIG. 1 schematically shows a configuration of an energy storage system control device and a power operation system according to one embodiment.

Referring to FIG. 1, an energy storage system (ESS) 20 may be a system for separately storing surplus power in a battery and supplying the same as needed, and may refer to a configuration that can solve power supply and demand problems by storing power that is wasted at night and supplying it during peak hours.

The ESS 20 may receive and store power from a power grid 21, a renewable energy generation module 22, or an electric vehicle 23, and a battery module included in the ESS 20 may be configured as a combination of series and parallel connection of a plurality of battery cells.

Here, the power grid 21 may be a network linked to a power supplier that generates and supplies power. That is, the power grid 21 may be a network interconnected to supply electricity from a power producer to a power consumer.

In addition, the renewable energy generation module 22 may be a module for generating electric energy using solar energy, wind power, geothermal energy, ocean energy, and bio energy.

The ESS 20 may further include a power conversion device (not shown), and the power conversion device (not shown) may convert AC power supplied from the power grid 21 into DC power and store the DC power in the battery module. In addition, the power conversion device (not shown) may convert an output of the battery module or an output of the renewable energy generation module 22 into AC power and supply the AC power to a load 24 or transmit the AC power to a grid.

An ESS control device 1 may control the charging/discharging of the battery module, monitor a voltage, current, temperature, etc. of the battery module to control and management the same to prevent overcharging, overdischarging, etc. and include, for example, a battery management system (BMS).

The ESS 20 may be a component connected to inputs/outputs of the power grid 21, the renewable energy generation module 22, the electric vehicle 23, the load 24, and the ESS 20 to control the mutual distribution and connection of the inputs/outputs according to a power state of the ESS 20.

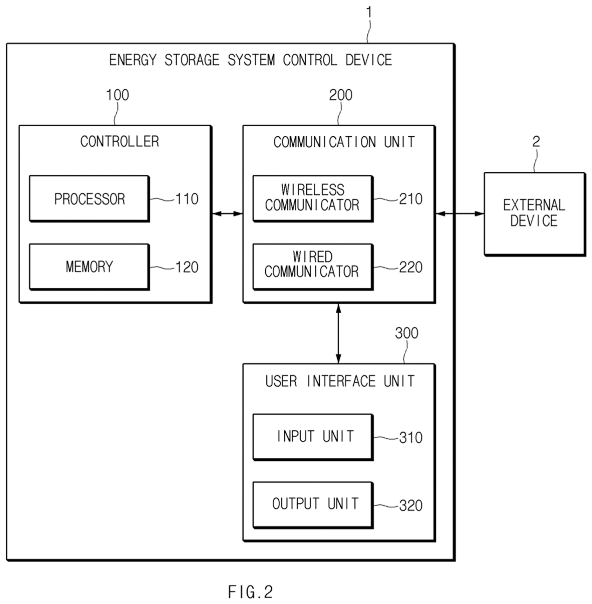

A detailed configuration of the ESS control device 1 according to one embodiment will be described below with reference to FIG. 2.

FIG. 2 shows a block diagram of the configuration of the energy storage system control device according to one embodiment.

Referring to FIG. 2, the ESS control device 1 according to one embodiment may include a controller 100 including at least one processor 110 and a memory 120, a communication unit 200, and a user interface unit 300 and control the ESS 20 by communicating with an external device 2 through a communication unit 200.

The ESS control device 1 according to one embodiment may be any electronic device including the processor 110 and the memory 120.

The communication unit 200 may include a wireless communicator 210 and a wired communicator 220 to communicate with the external device 2. The communication unit 200 may transmit and receive various pieces of data related to a cost function and a weight from the separately provided user interface unit 300.

The wireless communicator 210 may include at least one of a short-range communication module and a long-range communication module.

The short-range communication module may communicate with the external device 2 adjacent to the ESS control device 1 using a short-range communication method. Here, the short-range communication module may use one communication method of Bluetooth, Bluetooth low energy, infrared data association (IrDA), Zigbee, Wi-Fi, Wi-Fi direct, ultra-wideband (UWB), and near field communication (NFC).

The long-range communication module may include a communication module for performing various types of long-range communication and include the mobile communication unit 200. The mobile communication unit 200 may transmit and receive a wireless signal with at least one of a base station, an external terminal, and the external device 2 on a mobile communication network. In addition, the long-range communication module may communicate with the external device 2, the external device 2 such as another electronic device, etc. through a nearby access point (AP). The access point (AP) may connect a local area network (LAN) to which the ESS control device 1 is connected to a wide area network (WAN) to which a communication server is connected. Therefore, the ESS control device 1 may mutually communicate by being connected to the communication server through the external device 2 and the wide area network (WAN).

The wired communicator 220 may access a wired communication network and communicate with the external device 2 through the wired communication network. For example, the wired communicator 220 may access the wired communication network through Ethernet (IEEE 802.3 technical standard) or access the wired communication network through CAN communication, and transmit and receive data with the external devices 2 through the wired communication network.

The ESS control device 1 according to one embodiment may include the user interface unit 300 having an input unit 310 and an output unit 320.

The input unit 310 may be implemented as at least one input means of input means such as a touch screen, a push button, a membrane button, a dial, and a slider switch, but is not limited thereto.

The output unit 320 may be implemented as a display means such as a plasma display panel (PDP), a liquid crystal display (LCD) panel, a light emitting diode (LED) panel, an organic light emitting diode (OLED) panel, an active-matrix organic light-emitting diode (AMOLED) panel, and a curved display panel, but is not limited thereto.

The user interface unit 300 may provide an interface that connects the input unit 310 and the output unit 320 to the processor 110 to transmit and receive data.

The memory 120 may store various pieces of information required for driving the ESS control device 1. Specifically, the memory 120 may store an operating system and program required for driving the ESS control device 1 or store data required for driving the ESS control device 1.

Specifically, the memory 120 may store various programs related to the power generation amount of the renewable energy generation module 22 and the consumption amount used in the load 24 or the electric vehicle 23. In addition, the memory 120 may store various pieces of battery data such as a voltage, current, temperature, and characteristic value data of each battery cell.

In addition, the memory 120 may store a cost function selected by a user and store a combination of the cost function for recommending a weight and the weight.

The memory 120 may include the volatile memory 120 such as a static random access memory (SRAM) or dynamic random access memory (DRAM) for temporarily storing data. In addition, the memory 120 may include the nonvolatile memory 120 such as a read only memory (ROM), erasable programmable ROM (EPROM), or electrically erasable programmable ROM (EEPROM) for storing data for a long time.

The processor 110 outputs a control signal to generally control the ESS control device 1. The processor 110 may include one or more central processing units (CPUs) and graphics processing units (GPUs). In this case, the processor 110 may be implemented as an array of a plurality of logic gates and implemented as a combination of a general-purpose microprocessor 110 and the memory 120 in which a program that may be executed in the microprocessor 110 is stored.

The memory 120 and the processor 110 may be included in the controller 100, and the controller 100 may control the above-described components to determine abnormal battery data among pieces of battery data.

Specifically, the controller 100 may determine an objective function based on a cost function selected by a user and perform battery control optimization based on an external power generation amount, an internal power consumption amount, and the objective function.

In addition, the controller 100 may perform the battery control optimization based on a first time point, determine a predicted value of battery charging/discharging power based on the battery control optimization performed at the first time point, determine a predicted section including the predicted value of the battery charging/discharging power, and re-perform the battery control optimization based on an actual value of the battery charging/discharging power being out of a range of the predicted section.

In addition, the controller 100 may adjust variables for the battery control optimization based on the actual value of the battery charging/discharging power being out of the range of the predicted section, and the controller 100 may re-perform the battery control optimization based on variables adjusted for the battery control optimization.

In addition, the controller 100 may modify a charging/discharging schedule based on the re-performed battery control optimization and perform charging/discharging based on the modified charging/discharging schedule.

In addition, the controller 100 may receive a weight for determining the priority of the cost function from the user through the user interface unit 300 and determine the objective function as a weighted sum of the weight and the cost function.

In addition, the controller 100 may recommend a weight to the user based on the weight being not input from the user for a preset time, and the controller 100 may generate combinations that may be generated based on the number of cost functions and section information of the weight and may recommend a combination with the lowest power purchase cost among the generated combinations to the user.

Therefore, the ESS control device 1 according to one embodiment can reduce uncertainty that may occur in the battery optimization process and optimize the charging/discharging schedule of the ESS 20 in consideration of the user's intention, thereby improving the reliability of optimization and increasing user satisfaction.

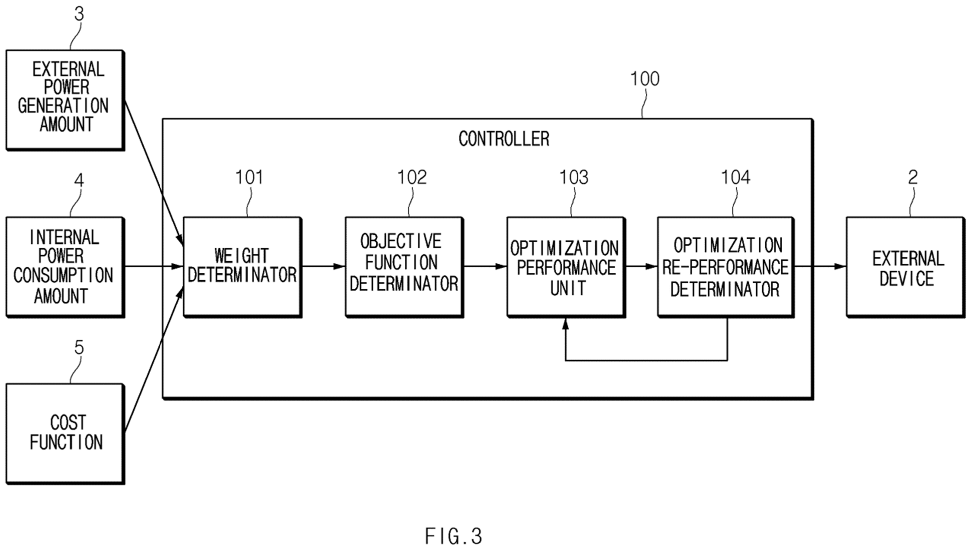

FIG. 3 schematically shows a flow in which a controller of the energy storage system control device according to one embodiment determines whether to re-perform optimization.

Referring to FIG. 3, the controller 100 of the ESS control device 1 according to one embodiment may determine whether to re-perform the battery optimization control based on an external power generation amount, an internal power consumption amount, and a cost function.

Specifically, the external power generation amount may be a power generation amount generated from the power grid 21, the renewable energy generation module 22, the electric vehicle 23, the internal power consumption amount may be a power consumption amount used in the power grid 21, the electric vehicle 23, and the load 24, and the cost function may be a function that is received from the user through the input unit 310 and minimizes errors.

Then, a weight determinator 101 of the controller 100 may determine a weight based on whether a command that selects a weight is input from the user.

Specifically, when the user inputs the weight through the input unit 310, the controller 100 may determine that the input weight is a weight for generating an objective function.

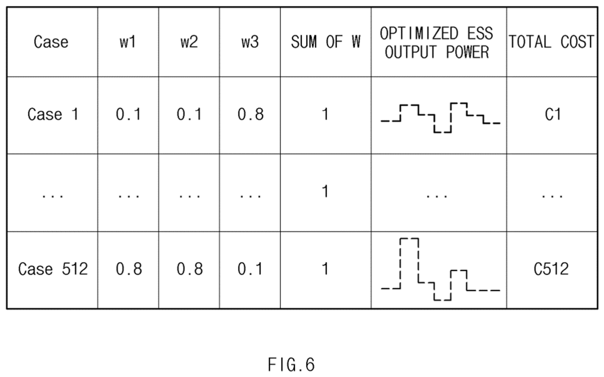

On the other hand, the controller 100 may recommend a weight to the user when the user does not input the weight through the input unit 310, generate combinations that may be generated based on the number of cost functions and the section information of the weight, and recommend a weight in the combination with the lowest power purchase cost among the generated combinations to the user. The above will be described below with reference to FIG. 6.

Then, an objective function determinator 102 of the controller 100 may determine the objective function based on the weight and cost function selected by the user, and a cost function $J_n$ may be configured in various ways as follows based on the user's intention.

[Equation 1]

$$J_1 = \sum\nolimits_{k=0}^{t-1} p_k^g C_k \triangle k$$

[Equation 2]

$$J_2 = t^* \max p_k^g / \sum\nolimits_{k=0}^{t-1} p_k^g$$

[Equation 3]

$$J_3 = \sum\nolimits_{k=0}^{t-1} R_k(SOC_k, T_k)$$

[Equation 4]

$$J_4 = \sum_{k=0}^{t-1} (SOC_{k+1} - SOC_k)^T (SOC_{k+1} - SOC_k)$$

[Equation 5]

$$J_5 = f(\Delta Q_k, \Delta R_k)$$

[Equation 6]

$$J_6 = \sum_{k=0}^{t-1} (SOC_k - SOC_{k,d})^T (SOC_k - SOC_{k,d})$$

[Equation 7]

$$J_7 = \sum_{k=0}^{t-1} |g(T_{k,i}, H_{k,i}) - g(T_{k,d}, H_{k,d})|$$

Specifically, Equation 1 may mean a cost function that minimizes a net power usage amount, Equation 2 may mean a cost function related to peak shaving, which minimizes a peak load 24, and Equation 3 may mean a cost function that minimizes internal resistance in relation to battery performance degradation.

In addition, Equation 4 may mean a cost function that minimizes a sudden change in state of charge (SOC) in relation to battery performance degradation, and Equation 5 may mean a cost function that minimizes a difference between battery cells.

In addition, Equations 6 and 7 may mean a cost function used in the home ESS 20, in which Equation 6 may mean a cost function that minimizes a difference between a backup SOC and a user's required SOC to maintain the backup SOC used in the home ESS and Equation 7 may mean a cost function that minimizes a difference between a current indoor temperature and the user's required temperature.

In this case, f in the cost function denotes a function related to a degree of deterioration of the battery cell, and g in the cost function denotes a function related to the user's inconvenience.

The controller 100 may receive a command that selects a cost function from the user and determine an objective function Min.Z as in Equation 8 below using a weighted sum of the selected cost function and a weight.

[Equation 8]

$$\text{Min. } Z = \min_{\tilde{x}, \tilde{u}} \sum_j w_j J_j$$

In this case, $\tilde{X}$ denotes a status variable and may include $[p_1^g, ..., p_k^g, SOC_1, ..., SOC_k]^T$, and $\tilde{U}$ denotes a control variable and may include $[p_1^b, ..., p_k^b]^T$.

In the cost function and the objective function, $p_k^g$ denotes the amount of power [kW] taken from a grid at a specific time k, $p_k^b$ denotes the output power of an energy storage device at the specific time k, and $SOC_k$ denotes the SOC of the energy storage device at the specific time k. In addition, in the cost function and the objective function, $T_k$ denotes the temperature °C of the energy storage device at the specific time k, $H_k$ denotes the indoor humidity [%] inside the home at the specific time k, $C_k$ the power usage time ($/kWh) based on the power cost at the specific time k, $R_k$ denotes internal resistance [ohm] at the specific time k, $Q_k$ denotes the capacity [Ah] at the specific time k, and $w_k$ denotes the weights (0 <= wi, ..., w_j) that are traded off.

Then, an optimization performance unit 103 of the controller 100 may perform battery optimization based on an external power generation amount, an internal power consumption amount, and the determined objective function. In this case, the battery optimization may mean determining a charging/discharging schedule so that the determined objective function has a minimum value.

The controller 100 may perform optimization and then determine whether re-performance of the optimization is needed in an optimization re-performance determinator 104.

Specifically, the controller 100 may perform the battery control optimization based on the first time point, determine a predicted value of battery charging/discharging power based on the battery control optimization performed at the first time point, determine a predicted section including the predicted value of the battery charging/discharging power, and re-perform the battery control optimization based on an actual value of the battery charging/discharging power being out of a range of the predicted section.

That is, the controller 100 may determine that a time point one day earlier than the second time point, which is the time point when actual battery charging/discharging are performed, is the first time point and perform optimization in advance at the first time point. Then, the controller 100 may determine a predicted value of the charging/discharging power at the second time point based on the result of performing the optimization.

In this case, when reaching the second time point, the controller 100 may receive an actual value of the charging/discharging power from the ESS 20, and when the actual value of the charging/discharging power is out of a preset reference range (e.g., a 95% range of a predicted error), the controller 100 may re-perform the battery control optimization.

Since the ESS control device 1 according to one embodiment may reduce the error between the predicted value and the actual value, it is possible to minimize uncertainty, thereby reducing cost loss.

The controller 100 may transmit the optimization results to a user terminal and a server device based on the result of re-performing the optimization to inform the user.

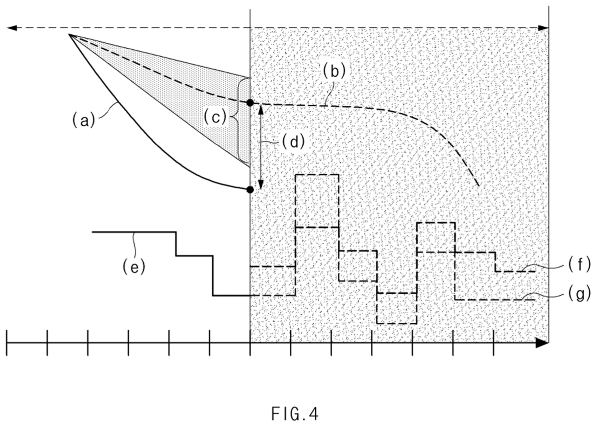

FIG. 4 shows a graph of conditions in which the energy storage system is optimized by the energy storage system control device according to one embodiment.

Referring to FIG. 4, the controller 100 may determine that a difference between an actual value a and a predicted value b of the charging/discharging power is an error d. The ESS control device 1 according to the present disclosure may be operated to minimize the error d between the actual value a and the predicted value b.

In this case, the controller 100 may determine a predicted section c including the predicted value of the charging/discharging power, and when it is determined that the actual value a of the charging/discharging power exceeds a range of the predicted section c, the controller 100 may re-perform battery optimization.

That is, the controller 100 may perform optimization at the first time point and derive a predicted charging/-discharging schedule f from a previously performed charging/discharging schedule e. In this case, the controller 100 may derive the predicted value b and predicted section c of the charging/discharging power by the predicted charging/discharging schedule f. In this case, when it is determined that the actual value a of the charging/discharging power at the second time point actually exceeds the range of the predicted section c, the controller 100 may perform charging/discharging by a modified charging/discharging schedule g.

The controller 100 may determine the predicted section c, which is the basis for determining whether the actual value a of the charging/discharging power exceeds the range of the predicted section c as shown in Equation 9 below.

[Equation 9]

$$y' = \hat{y} \pm t^* s_E \sqrt{1 + \frac{1}{n} + (x^* - \bar{x})^2 / (n-1) s_x^2}$$

In this case, $\bar{x}$ denotes an average of prediction variables, Y denotes a predicted reaction variable value, $x^*$ denotes a prediction variable value, $s_x$ denotes a standard deviation of the prediction variable, $s_E$ denotes a standard deviation of an error term, $t^*$ denotes a percentile of distribution t in which a degree of freedom is n-2.

As described above, the controller 100 may determine the predicted section and use the predicted section as a basis for re-performing battery optimization.

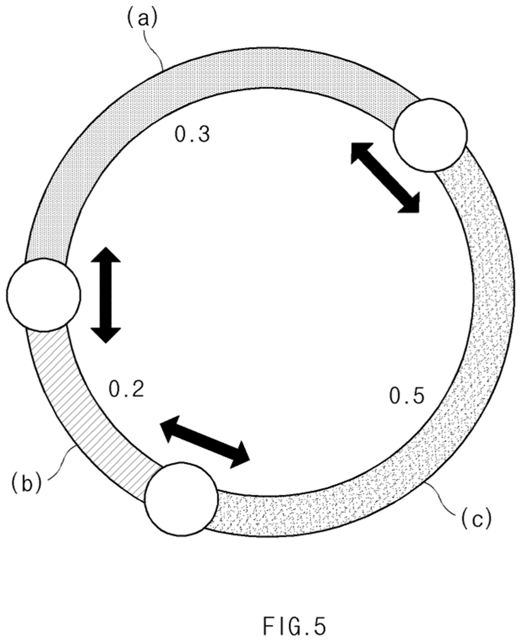

FIG. 5 shows a user interface unit of the energy storage system control device according to one embodiment.

Referring to FIG. 5, the input unit 310 of the ESS control device 1 according to an embodiment may be configured as a user interface (UI) in which a ratio of weights is adjusted based on the user's input.

Therefore, the user may manipulate the UI according to the purpose of using the ESS 20 and easily adjust the cost function and the weight according to the UI manipulation.

In this case, the UI may have a structure that maintains the sum of the weights to be 1, and the structure of the UI may be applied in various ways such as a circular and bar shape and is not limited to the shape. In addition, a method of adjusting the weight through the UI by the user may include dragging, entering numbers, etc., and there is no limitation on the method as long as the weight may be adjusted.

As shown in FIG. 5, the user may determine that a weight for power cost minimization a is 0.3, determine that a weight for peak shaving minimization b that minimizes the peak load 24 is 0.2, and determine that a weight for battery deterioration minimization c is 0.5.

Therefore, the objective function may be determined as shown in Equation 10 below.

[Equation 10]

$$\sum_{j=1}^{3} w_j J_j = 0.3 \sum_{k=0}^{t-1} p_k^g C_k \Delta k + 0.2t * \max p_k^g / \sum_{k=0}^{t-1} p_k^g + 0.5 \sum_{k=0}^{t-1} R_k (SOC_{k,T_k})$$

When the user does not set the weight, the controller 100 may recommend the weight as shown in FIG. 6, and as a default value, the weight for power cost minimization may be set to 1 like the installation purpose of the ESS 20.

FIG. 6 shows a table for recommending a weight in the energy storage system control device according to one embodiment.

Referring to FIG. 6, the controller 100 may recommend the weight based on a weight input command being not received from the user. Specifically, the controller 100 may generate combinations that may be generated based on the number of cost functions and the section information of the weight and recommend a combination with the lowest power purchase cost among the combinations to the user.

That is, as in the table of FIG. 6, when the number of cost functions constituting the objective function is n, and a changeable weight section is w when a minimum change unit of the weight is 0.1, the controller 100 may calculate all combinations of $w^n$ and recommend a weight of a case where the total cost is minimum to the user. In this case, the cost may be calculated based on the power used in the ESS 20 and an electric cost that varies over time.

For example, when the number of cost functions is 3, the minimum change unit of the weight is 0.1, and the changeable weight section is 8 (8 sections from 0.1 to 0.8), all possible combinations are determined to be $8^3$, a total of 512 combinations.

In this case, assuming that the total cost C1 is the minimum cost among all cases in FIG. 6, the controller 100 may recommend w1 of 0.1, w2 of 0.1, and w3 of 0.8 that correspond to case 1 among 512 combinations to the user. When a plurality of combinations with the same cost are provided, a combination may be arbitrarily recommended.

According to the ESS control device 1 according to one embodiment, even when the user does not set the weight, the weight is recommended based on the minimum cost, and thus convenience is increased.

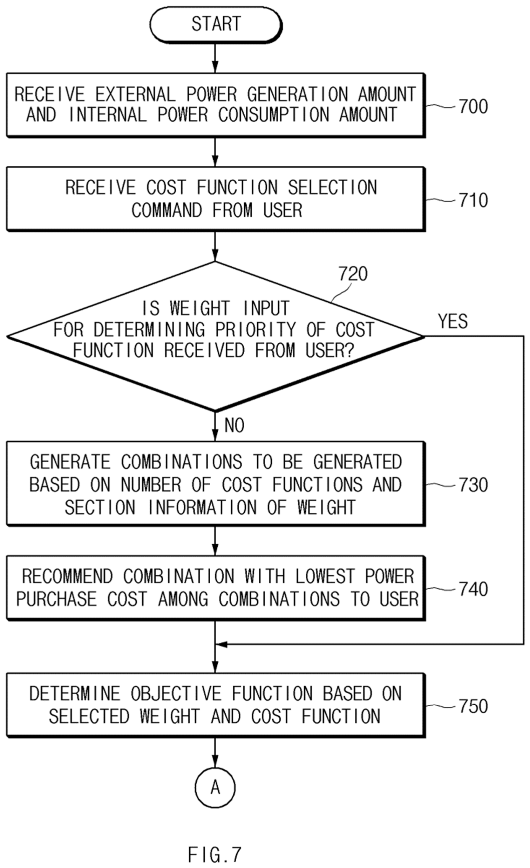

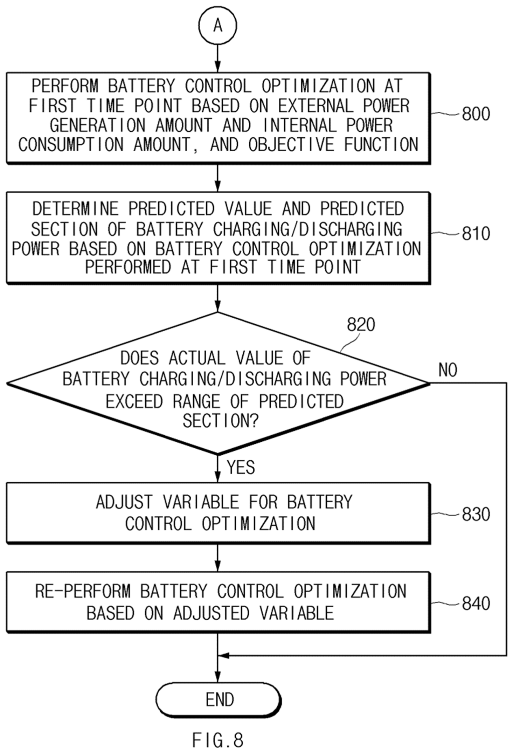

FIG. 7 shows a flowchart of a method of controlling the energy storage system according to one embodiment, and FIG. 8 continuously shows a flowchart of the method of controlling the energy storage system according to one embodiment after FIG. 7.

Referring to FIG. 7, the controller 100 may receive an external power generation amount and an internal power consumption amount through the communication unit 200 (700). In addition, the controller 100 may receive a cost function selection command that selects a cost function from the user (710). Although FIG. 7 shows that the external power generation amount and the internal power consumption amount are received and the cost function selection command is received, which may be performed in parallel, and there is no limitation on the sequence.

Then, the controller 100 may determine whether a weight input for determining the priority of the cost function has been received from the user (720).

When it is determined that the weight input for determining the priority of the cost function has not been received from the user (No in 720), the controller 100 may generate all combinations that may be generated based on the number of cost functions and the section information of the weight (730).

The controller 100 may recommend a weight included in the combination with the lowest power purchase cost among the generated combinations to the user (740). Then, when the weight input for determining the priority of the cost function is received from the user (Yes in 720) or the user selects the recommended weight, the controller 100 may determine an objective function based on the selected weight and cost function (750).

Continuously referring to FIG. 8, battery control optimization may be performed at the first time point based on an external power generation amount, an internal power consumption amount, and an objective function (800). As described above, the first time point may be a time point one day before a time point when actual charging and discharging is performed.

The controller 100 may determine a predicted value and a predicted section of the battery charging/discharging power based on the battery control optimization performed at the first time point (810). The controller 100 may determine whether the actual value of the battery charging/discharging power exceeds a predicted section range (820).

When it is determined that the actual value of the battery charging/discharging power exceeds the predicted section range (Yes in 820), the controller 100 may adjust a variable for the battery control optimization (830) and re-perform battery control optimization based on the adjusted variable (840).

As described above, the ESS control device 1 according to one embodiment can eliminate uncertainty in the process of performing battery control optimization, thereby enabling efficient and user-friendly charging/discharging schedule management.

Meanwhile, disclosed embodiments may be implemented in the form of a recording medium in which commands executable by a computer are stored. The commands may be stored in the form of program code, and when executed by a processor, program modules are generated to perform operations of the disclosed embodiments. The recording medium may be implemented as a computer-readable recording medium.

The computer-readable recording medium includes any type of recording media in which commands which may be decoded by a computer are stored. For example, there may be a ROM, a RAM, a magnetic tape, a magnetic disk, a flash memory, an optical data storage device, etc.

In addition, the computer-readable storage medium may be provided in the form of a non-transitory storage medium. Here, "non-transitory" is a tangible device and only means not including a signal (e.g., electromagnetic waves), and this term does not distinguish between cases in which data is stored semi-permanently and temporarily in the storage medium. For example, "non-temporary storage medium" may include a buffer in which data is temporarily stored.

According to one embodiment, a method according to various embodiments disclosed herein may be provided by being included in a computer program product. The computer program product may be traded between sellers and buyers as commodities. The computer program product may be distributed in the form of a device-readable storage medium (e.g., compact disc read only memory (CD-ROM)) or distributed online (e.g., downloading or uploading) via an application store (e.g., Play Store™) or directly between two user devices (e.g., smartphones). In the case of the online distribution, at least some of the computer program products (e.g., a downloadable app) may be at least temporarily stored or temporarily generated in a device-readable storage medium such as a memory of a server of a manufacturer, a server of an application store, or a relay server.

Although all the components constituting the embodiments disclosed herein were described above as being operated by being coupled to one or being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present document without departing from the essential characteristics of the embodiments disclosed herein. Therefore, the embodiments disclosed herein are not intended to limit the technical spirit disclosed herein but are intended to describe the same, and the scope of the technical spirit disclosed herein is not limited by these embodiments. The scope of the technical spirit disclosed herein should be construed by the appended claims, and all technical ideas within the equivalent range should be construed as being included in the scope of the present document.

**Claims**

1. An energy storage system control device comprising:

   a communication unit configured to receive an external power generation amount and an internal power consumption amount;
   a user interface unit configured to receive a cost function selection command from a user;
   a controller configured to determine an objective function based on a cost function selected by the user and perform battery control optimization based on the external power generation amount, the internal power consumption amount, and the objective function,
   wherein the controller is configured to:

      perform the battery control optimization based on a first time point;
      determine a predicted value of battery charging/discharging power based on the battery control optimization performed at the first time point; and
      determine a predicted section including the predicted value of the battery charging/discharging power and re-perform the battery control optimization based on an actual value of the battery charging/discharging power being out of a range of the predicted section.

2. The energy storage system control device of claim 1, wherein the controller adjusts a variable for the battery control optimization based on the actual value of the battery charging/discharging power being out of the range of the predicted section.

3. The energy storage system control device of claim 2, wherein the controller re-performs the battery control optimization based on the variable adjusted for the battery control optimization.

4. The energy storage system control device of claim 1, wherein the controller receives a weight for determining a priority of the cost function through the user interface unit from the user and determines the objective function using a weighted sum of the weight and the cost function.

5. The energy storage system control device of claim 4, wherein the user interface unit further includes an input unit, and the input unit is configured as a user interface (UI) in which a ratio of the weight is adjusted based on the user's input.

6. The energy storage system control device of claim 4, wherein the controller recommends the weight to the user based on the weight being not input for a preset time from the user.

7. The energy storage system control device of claim 6, wherein the controller generates combinations to be generated based on the number of cost functions and section information of the weight and recommends a combination with the lowest power purchase cost among the combinations to the user.

8. The energy storage system control device of claim 1, wherein the cost function includes a function that minimizes a difference between a backup state of charge (SOC) used in a home energy storage system and the user's required SOC.

9. The energy storage system control device of claim 1, wherein the cost function includes a function that minimizes a difference between a current indoor temperature used in a home energy storage system and the user's required temperature.

10. The energy storage system control device of claim 1, wherein the controller modifies a charging/discharging schedule based on the re-performed battery control optimization and performs charging/discharging based on the modified charging/discharging schedule.

11. A method of controlling an energy storage system, comprising:

   receiving an external power generation amount and an internal power consumption amount;
   receiving a cost function selection command from a user;
   determining an objective function based on a cost function selected by the user; and
   performing battery control optimization based on the external power generation amount, the internal power consumption amount, and the objective function,
   wherein the performing of the battery control optimization includes:

      performing the battery control optimization based on a first time point;
      determining a predicted value of battery charging/discharging power based on the battery control optimization performed at the first time point;
      determining a predicted section including the predicted value of the battery charging/discharging power; and
      re-performing the battery control optimization based on an actual value of the battery charging/discharging power being out of a range of the predicted section.

12. The method of claim 11, further comprising adjusting a variable for the battery control optimization based on the actual value of the battery charging/discharging power being out of the range of the predicted section.

13. The method of claim 12, further comprising re-performing the battery control optimization based on the variable adjusted for the battery control optimization.

14. The method of claim 11, wherein the determining of the objective function includes receiving a weight for determining a priority of the cost function through the user interface unit from the user and determining the objective function using a weighted sum of the weight and the cost function.

15. The method of claim 14, further comprising adjusting a ratio of the weight based on the user's input that is input to an input unit included in the user interface unit.

16. The method of claim 14, further comprising recommending the weight to the user based on the weight being not input for a preset time from the user.

17. The method of claim 16, wherein the recommending of the weight to the user includes generating combinations to be generated based on the number of cost functions and section information of the weight and recommending a combination with the lowest power purchase cost among the combinations to the user.

18. The method of claim 11, wherein the cost function includes a function that minimizes a difference between a backup state of charge (SOC) used in a home energy storage system and the user's required SOC.

19. The method of claim 11, wherein the cost function includes a function that minimizes a difference between a current indoor temperature used in a home energy storage system and the user's required temperature.

20. The method of claim 11, further comprising modifying a charging/discharging schedule based on the re-performed battery control optimization and performing charging/discharging based on the modified charging/discharging schedule.

FIG.1

FIG.2

FIG.3

FIG.4

FIG.5

| Case | w1 | w2 | w3 | SUM OF W | OPTIMIZED ESS OUTPUT POWER | TOTAL COST |
|------|------|------|------|----------|----------------------------|------------|
| Case 1 | 0.1 | 0.1 | 0.8 | 1 | | C1 |
| ... | ... | ... | ... | 1 | ... | ... |
| Case 512 | 0.8 | 0.8 | 0.1 | 1 | | C512 |

FIG.6

EP 4 742 481 A1

START

RECEIVE EXTERNAL POWER GENERATION AMOUNT
AND INTERNAL POWER CONSUMPTION AMOUNT — 700

RECEIVE COST FUNCTION SELECTION
COMMAND FROM USER — 710

IS WEIGHT INPUT
FOR DETERMINING PRIORITY OF COST
FUNCTION RECEIVED FROM USER? — 720  YES

NO

GENERATE COMBINATIONS TO BE GENERATED
BASED ON NUMBER OF COST FUNCTIONS AND
SECTION INFORMATION OF WEIGHT — 730

RECOMMEND COMBINATION WITH LOWEST POWER
PURCHASE COST AMONG COMBINATIONS TO USER — 740

DETERMINE OBJECTIVE FUNCTION BASED ON
SELECTED WEIGHT AND COST FUNCTION — 750

A

FIG.7

19

A

PERFORM BATTERY CONTROL OPTIMIZATION AT FIRST TIME POINT BASED ON EXTERNAL POWER GENERATION AMOUNT AND INTERNAL POWER CONSUMPTION AMOUNT, AND OBJECTIVE FUNCTION — 800

DETERMINE PREDICTED VALUE AND PREDICTED SECTION OF BATTERY CHARGING/DISCHARGING POWER BASED ON BATTERY CONTROL OPTIMIZATION PERFORMED AT FIRST TIME POINT — 810

820

DOES ACTUAL VALUE OF BATTERY CHARGING/DISCHARGING POWER EXCEED RANGE OF PREDICTED SECTION?

NO

YES

ADJUST VARIABLE FOR BATTERY CONTROL OPTIMIZATION — 830

RE-PERFORM BATTERY CONTROL OPTIMIZATION BASED ON ADJUSTED VARIABLE — 840

END

FIG.8

## INTERNATIONAL SEARCH REPORT

| International application No. |
| --- |
| **PCT/KR2024/011993** |

| A. | CLASSIFICATION OF SUBJECT MATTER |
| --- | --- |

**H02J 3/32**(2006.01)i; **H02J 7/00**(2006.01)i; **G06F 17/15**(2006.01)i

According to International Patent Classification (IPC) or to both national classification and IPC

| B. | FIELDS SEARCHED |
| --- | --- |

Minimum documentation searched (classification system followed by classification symbols)

H02J 3/32(2006.01); G06Q 50/06(2012.01); H02J 3/00(2006.01); H02J 3/38(2006.01); H02J 3/46(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에너지 저장 시스템(Energy Storage System, ESS), 비용(cost), 함수 (function), 최적화(optimization), 예측(predict)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2020-0089056 A (KOREA INSTITUTE OF ENERGY RESEARCH) 24 July 2020 (2020-07-24) See paragraphs [0054]-[0135], claims 1-21, and figures 5-14. | 1-20 |
| A | KR 10-2022-0053979 A (FOUNDATION FOR RESEARCH AND BUSINESS, SEOUL NATIONAL UNIVERSITY OF SCIENCE AND TECHNOLOGY) 02 May 2022 (2022-05-02) See paragraphs [0048]-[0109], claims 1-5, and figures 1-2. | 1-20 |
| A | JP 2022-188870 A (TOYOTA CENTRAL R&D LABS INC.) 22 December 2022 (2022-12-22) See paragraphs [0019]-[0057], and figures 1-3. | 1-20 |
| A | JP 2010-124644 A (NIPPON TELEGR & TELEPH CORP.) 03 June 2010 (2010-06-03) See paragraphs [0022]-[0058], and figures 1-2. | 1-20 |
| A | KR 10-2022-0123365 A (H ENERGY CO., LTD.) 06 September 2022 (2022-09-06) See paragraphs [0038]-[0106], and figures 1-2. | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 November 2024** | **18 November 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/011993**

| Patent document cited in search report | | | Publication date (day/month/year) | Patent family member(s) | | | Publication date (day/month/year) |
|---|---|---|---|---|---|---|---|
| KR | 10-2020-0089056 | A | 24 July 2020 | KR | 10-2235667 | B1 | 02 April 2021 |
| KR | 10-2022-0053979 | A | 02 May 2022 | KR | 10-2599639 | B1 | 08 November 2023 |
| JP | 2022-188870 | A | 22 December 2022 | JP | 7359193 | B2 | 11 October 2023 |
| JP | 2010-124644 | A | 03 June 2010 | JP | 5215822 | B2 | 19 June 2013 |
| KR | 10-2022-0123365 | A | 06 September 2022 | KR | 10-2021-0146684 | A | 06 December 2021 |
| | | | | KR | 10-2648702 | B1 | 18 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230110622